(19) Europäisches Patentamt

European Patent Office

Office européen des brevets

(11) Veröffentlichungsnummer: **0 268 325 B1**

(12) # EUROPÄISCHE PATENTSCHRIFT

(45) Veröffentlichungstag der Patentschrift: **29.01.92**

(51) Int. Cl.5: **F16H  55/08**, //F16H3/22

(21) Anmeldenummer: **87202160.5**

(22) Anmeldetag: **06.11.87**

(54) **Zahnrad für ein Zahnradgetriebe.**

(30) Priorität: **17.11.86 DE 3639325**

(43) Veröffentlichungstag der Anmeldung:
**25.05.88 Patentblatt  88/21**

(45) Bekanntmachung des Hinweises auf die
Patenterteilung:
**29.01.92 Patentblatt  92/05**

(84) Benannte Vertragsstaaten:
**AT CH DE ES FR GB IT LI**

(56) Entgegenhaltungen:
**EP-A- 0 278 533**
**DD-A- 119 643**
**GB-A- 227 235**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

Patentinhaber: **N.V. Philips' Gloeilampenfabrieken**
**Groenewoudseweg 1**
**NL-5621 BA Eindhoven(NL)**

(84) Benannte Vertragsstaaten:
**CH ES FR GB IT LI AT**

(72) Erfinder: **Kunze, Norbert**
**Mozartstrasse 7**
**W-6332 Ehringshausen(DE)**

(74) Vertreter: **Kupfermann, Fritz-Joachim,**
**Dipl.-Ing. et al**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf ein Zahnrad für ein Zahnradgetriebe, bei dem die Zähne jeweils zweier Zahnräder mit Zahnkörper und Zahnkopf auch im drehfreien Zustand zum Einkämmen zusammenführbar sind.

Derartige Zähnräder sind innerhalb von Zahngetrieben beispielsweise in Radio-Recordern bekannt. Die Zahnräder werden in drehfreiem oder drehendem Zustand wechselweise mit anderen Zahnrädern kämmend in Eingriff gebracht. dieses kämmende In-Eingriff-Bringen unterliegt Störungen, wenn Zahnköpfe Zahn auf Zahn miteinander in Berührung kommen.

Es ist aus der DD-A-119 643 bekannt, zur Vermeidung des Zahn-auf-Zahn-Gehens die Zahnköpfe durch positive Profilverschiebung spitz zulaufen zu lassen, so daß die Zahnköpfe keine Zahnkopfflächen aufweisen. Dies kann aber nach einer gewissen Benutzungszeit bei Zahnspitzenberührung beim Ineinandergehen der Verzahnung zu Zahnkopfdeformationen, damit verbundenen Laufgeräuschen und zu einem Zahnspitzen-Bruch führen.

Es ist Aufgabe der Erfindung, ein Zahnrad so auszubilden, daß die Gefahr des Zahnspitzen-Bruches vermieden ist.

Die gestellte Aufgabe ist erfindungsgemäß dadurch gelöst, daß die Zahnkopfflächen der Zahnräder einseitig mit einer zur Tangente geneigten Kopffläche eingekürzt sind. Dadurch kann der Winkel zwischen Zahnflanke und Kopffläche bedeutend größer sein als bei positiv profilverschobenen Zahnrädern. Die Gefahr des Spitzenbruches wird dadurch verringert.

Dieses einseitige Einkürzen führt dazu, daß beim Auflaufen von Zahnkopf auf Zahnkopf keine Klemmung eintreten kann, sondern die Einkürzungen oder schrägen Verläufe der Zahnkopfflächen zu einem gegenseitigen Abgleiten und schließlich endgültigen Einkämmen führen.

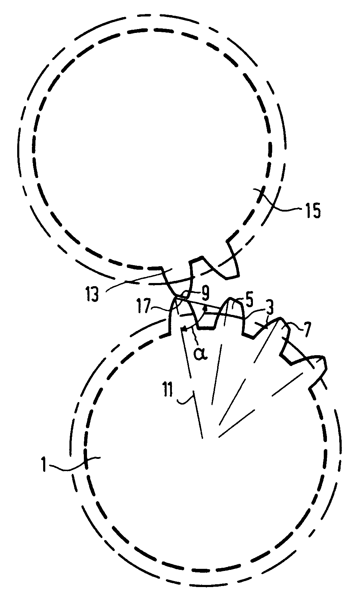

Ein weiterer Vorteil der erfindungsgemäßen Lösung ist, daß gegenüber positiv profilverschobenen Rädern Achsabstand bzw. Zähnezahl und Betriebs-Eingriffswinkel unverändert bleiben. Bei einer Zahnradpaarung nach der Zeichnung mit gegenläufiger Drehrichtung bleibt die Profilüberdeckung ebenfalls konstant.

Nach einer Ausgestaltung der Erfindung ist vorgesehen, daß die Zahnkopfflächen mit einer zugeordneten Zahnradradialen einen Winkel $\alpha < 90°$ einschließen. Jeder Winkel $\alpha$ unterhalb von $90°$ verbessert das Einkämmverhalten. Vorteilhaft ist es jedoch, wenn nach einer weiteren Ausgestaltung der Erfindung vorgesehen ist, daß die Zahnkopfflächen mit der zugeordneten Radialen einen Winkel von ca. $60°$ bis $75°$ einschließen.

Beim Aufeinander-Auflaufen der Zahnköpfe mit eingekürzten Zahnkopfflächen zeigt es sich, daß die Zahnköpfe mit einer gewissen Reibung zwischen den Zahnkopfflächen schließlich das Einkämmen einleiten. Unter Berücksichtigung dieser Reibungswerte ist nach einer weiteren Ausgestaltung der Erfindung die Einkürzung in vorteilhafter Weise derart getroffen, daß die Zahnkopfflächen mit der zugeordneten Radialen einen Winkel $\alpha <$ arc cotang $\mu$ einschließen, wobei $\mu$ der Reibungswert der Zahnköpfe aneinander ist.

Die Erfindung wird anhand des in der Zeichnung dargestellten Ausführungsbeispieles näher erläutert.

Die Zeichnung zeigt vier Zähne eines Zahnrades, das ein Zahnrad jedes beliebigen Getriebes sein kann, bei dem die Zahnräder vorzugsweise in drehfreiem Zustand miteinander einkämmen sollen. Das Zahnrad besteht aus einem nur gestrichelt angedeuteten Zahnkörper 1 mit Zähnen 3. Die Zähne 3 bestehen wiederum aus Zahnkörpern 5 und im Bereich der Zahnköpfe 7 vorgesehenen Zahnkopfflächen 9.

Die Zahnkopfflächen 9 schließen mit Zahnrad-Radialen 11 einen Winkel $\alpha$ ein, der kleiner als $90°$ ist. Der Winkel $\alpha$ kann zwischen $60°$ und $75°$ bemessen sein und wird etwa im günstigsten Fall 65 Winkelgrade aufweisen.

In Zahnkopf auf Zahnkopf-Auflage sind zwei Zähne 13 eines weiteren Zahnrades 15 dargestellt. Diese Zähne sind in entsprechender Weise wie die Zähne des Zahnrades 3 eingekürzt um den Winkel $\alpha$.

Wenn die beiden Zahnkopfflächen 9 des Zahnrades 3 und 17 des Zahnrades 5 aufeinander treffen, dann haben die Zahnkopfflächen 9 und 17 während der Berührungszeit eine gewisse Reibung miteinander. Dieser Reibungswert kann als $\mu$ angegeben werden.

Eine vorteilhafte Bemessung des Winkels orientiert sich an dem Reibungswert $\mu$ der Zahnkopfflächen 9 und 17. Der Winkel $\alpha$ wird dementsprechend in vorteilhafter Weise kleiner bemessen werden als arc cotang $\mu$.

Beim Ausführungsbeispiel ist eine besonders vorteilhafte gleichsinnige Einkürzung der Zahnköpfe beider Zahnräder vorgesehen. Ein gegensinniger Verlauf der Schrägungsflächen, insbesondere bei kleineren Winkeln $\alpha$, ist jedoch ebenfalls möglich. Dann stößt beim In-Eingriff-Bringen eine Kante des Zahnes eines Zahnrades auf eine geneigte Kopffläche eines Zahnes des anderen Zahnrades.

## Patentansprüche

1. Zahnrad (1) für ein Zahnradgetriebe, bei dem die Zähne (3, 13) jeweils zweier Zahnräder (1, 15) mit Zahnkörper (5) und Zahnkopf (7) auch im drehfreien Zustand zum Einkämmen zusammenführbar sind, dadurch gekennzeichnet, daß die Zahnkopfflächen (9, 17) der Zahnräder (1, 15) einseitig mit einer zur Tangente geneigten Kopffläche eingekürzt sind.

2. Zahnrad nach Anspruch 1, dadurch gekennzeichnet, daß die Zahnkopfflächen (9, 17) mit der zugeordneten Radialen (11) einen Winkel α von ca. 60° bis 75° einschließen.

3. Zahnrad nach einem der Ansprüche 1 bis 2, dadurch gekennzeichnet, daß die Zahnkopfflächen (9, 17) mit der zugeordneten Radialen (11) einen Winkel α < arc cotang μ einschließen, wobei μ der Reibungswert der Zahnköpfe (5) aneinander ist.

4. Zahnrad nach einem der Ansprüche 1 bis 3, dadurch gekennzeichnet, daß die Einkürzung um den Winkel α bei den zusammenwirkenden Zahnrädern (1, 15) gleich- oder gegensinnig vorgesehen ist.

## Claims

1. A toothed wheel (1) for a toothed gearing in which the teeth (3, 13) of a given pair of toothed wheels (1, 15) can be moved together so as to come into engagement with their tooth bodies (5) and tooth tips (7), also in the non-rotating state, characterized in that the tooth end faces (9, 17) of the toothed wheels (1, 15) are each shortened to form an end face which is bevelled off towards the tangent line on one side.

2. A toothed wheel as claimed in Claim 1, characterized in that it is ensured that the tooth that the toothe end faces (9, 17) enclose an angle of approximately 60° to 75° with the accompanying radius (11).

3. A toothed wheel as claimed in Claim 1 or 2, characterized in that the tooth end faces (9, 17) enclose an angle α < arc cot μ with the accompanying radius (11), μ being the friction coefficient between the tooth tips (5).

4. A toothed wheel as claimed in any one of the Claims 1 to 3, characterized in that the reduction by the angle α in the meshing toothed wheels (1, 15) is provided in the same direction or in opposite directions.

## Revendications

1. Roue dentée (1) pour un engrenage, dans lequel les dents (3, 13) de chacune de deux roues dentées (1, 15), comportant un corps (5) de dent et une tête (7) de dent, peuvent être réunies en vue d'un engrènement, même dans un état de non-rotation, caractérisée en ce que les faces de têtes de dents (9, 17) des roues dentées (1, 15) sont raccourcies, d'un côté, par une face de tête inclinée par rapport à la tangente.

2. Roue dentée suivant la revendication 1, caractérisée en ce que les faces de tête de dents (9, 17) forment un angle d'environ 60 à 75° avec la radiale (11) associée.

3. Roue dentée suivant la revendication 1 ou 2, caractérisée en ce que les faces de têtes de dents (9, 17) forment un angle α < arc cotg μ avec la radiale (11) associée, μ étant le coefficient de frottement des têtes de dents (5) entre elles.

4. Roue dentée suivant l'une quelconque des revendications 1 à 3, caractérisée en ce que le raccourcissement de l'angle α dans le cas des roues dentées (1, 15) coopérantes est prévu dans le même sens ou en sens opposé.